(19)

Europäisches
Patentamt
European
Patent Office
Office européen
des brevets

(11) **EP 4 501 883 A1**

(12) **EUROPEAN PATENT APPLICATION**
published in accordance with Art. 153(4) EPC

(43) Date of publication:
**05.02.2025 Bulletin 2025/06**

(21) Application number: **23780917.3**

(22) Date of filing: **30.03.2023**

(51) International Patent Classification (IPC):
$C04B\ 28/26^{(2006.01)}$   $C04B\ 12/04^{(2006.01)}$
$C04B\ 14/20^{(2006.01)}$   $C04B\ 20/00^{(2006.01)}$
$C04B\ 38/02^{(2006.01)}$

(52) Cooperative Patent Classification (CPC):
**C04B 12/04; C04B 14/20; C04B 20/00;**
**C04B 28/26; C04B 38/02;** Y02P 40/10

(86) International application number:
**PCT/JP2023/013267**

(87) International publication number:
**WO 2023/190909 (05.10.2023 Gazette 2023/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **31.03.2022 JP 2022059397**

(71) Applicant: **JSP Corporation**
**Tokyo 100-0005 (JP)**

(72) Inventors:
• **NORO, Jinichiro**
  **Kanuma-shi, Tochigi 322-0014 (JP)**
• **NAITO, Naoki**
  **Kanuma-shi, Tochigi 322-0014 (JP)**

(74) Representative: **Dehns**
**10 Old Bailey**
**London EC4M 7NG (GB)**

(54) **METHOD FOR PRODUCING GEOPOLYMER FOAM**

(57)    A method for producing a geopolymer foam, comprising obtaining a reaction slurry containing aluminosilicate, alkali metal silicate, aggregate, and water, adding a foaming agent to the reaction slurry to form a foaming slurry, and heating the foaming slurry, wherein the aggregate used is mica with an average particle size of 50 to 500 $\mu$m and a volume fraction (X) of particles with a particle size of 10 $\mu$m or less of 3% or less, and
wherein the viscosity of the reaction slurry at 23°C is 3000 to 15000 mPa-s.

**EP 4 501 883 A1**

**Description**

Technical Field

This invention relates to a method for manufacturing geopolymer foam.

Background Art

Geopolymer is an inorganic polymer produced by reacting aluminosilicate and alkali metal silicate, and it has attracted attention as environmentally friendly materials.

Geopolymer has a tetrahedral structure formed by $SiO_4$ and $AlO_4$, and within this network structure, it retains cations that compensate for the negative charge of $AlO_4$.

As a material using the above-mentioned geopolymer, for example, a waterabsorbing geopolymer material containing $Al_2O_3$-$SiO_2$-based powder, alkali metal silicate aqueous solution, water, a foaming agent, and an aggregate as a filler has been proposed (Patent Document 1).

Citation List

Patent Literature

Patent Literature 1 JP 2011-219281

Summary of Invention

Technical Problem

On the other hand, in the process of manufacturing a geopolymer foam, a reaction slurry is prepared as a slurry by dispersing aluminosilicate, alkali metal silicate, and an aggregate as a filler. When shear forces, such as stirring, are applied to this reaction slurry, the concentration of the slurry may rapidly increase. If such a phenomenon occurs, it becomes difficult to stably form cells in the resulting geopolymer. Additionally, if water is added to the reaction slurry to adjust its viscosity and suppress the rise in viscosity, it becomes difficult to obtain a geopolymer foam with excellent strength.

The present invention has been made in view of the above circumstances, and its objective is to provide a method for manufacturing geopolymer foam that can stably form cells in the geopolymer foam and maintain the strength of the geopolymer foam.

Means for Solving the Problem

To solve the above-mentioned problems, the method for producing a geopolymer foam according to the present invention is characterized by the following.

<1> A method for producing a geopolymer foam, comprising obtaining a reaction slurry containing aluminosilicate, alkali metal silicate, aggregate, and water, adding a foaming agent to the reaction slurry to form a foaming slurry, and heating the foaming slurry,

wherein the aggregate used is mica with an average particle size of 50 to 500 $\mu$m and a volume fraction (X) of particles with a particle size of 10 $\mu$m or less of 3% or less, and
wherein the viscosity of the reaction slurry at 23°C is 3000 to 15000 mPa·s.

<2> The method for producing a geopolymer foam according to <1>, wherein the average particle size of the mica is 80 to 300 $\mu$m.

<3> The method for producing a geopolymer foam according to <1> or <2>, wherein the amount of mica (Y) added is 10 to 150 parts by weight relative to 100 parts by weight of aluminosilicate, and the relationship between the amount of mica added (Y [parts by weight]) and the volume fraction (X [%]) of mica particles with a particle size of 10 $\mu$m or less in the mica satisfies the following formula (1):

$$0.1 \leqq X \times Y/100 \leqq 3 \quad \cdots (1)$$

<4> The method for producing a geopolymer foam according to any one of <1> to <3>, wherein the proportion of water in the reaction slurry is 25 to 45 parts by weight.

<5> The method for producing a geopolymer foam according to any one of <1> to <4>, wherein the aggregate further includes geopolymer powder, and the amount of the geopolymer powder added (Z) is 1 to 80 parts by weight relative to 100 parts by weight of aluminosilicate.

<6> The method for producing a geopolymer foam according to <5>, wherein the geopolymer powder is powder obtained by grinding geopolymer foam scraps and/or powder obtained by grinding the geopolymer foam.

<7> The method for producing a geopolymer foam according to <5> or <6>, wherein the volume fraction of geopolymer powder particles with a particle size of 10 $\mu$m or less in the geopolymer powder is 5% or less.

Effects of the Invention

According to the method for manufacturing geopolymer foam of the present invention, by using a specific type of aggregate added to the reaction slurry, controlling the particle size distribution of the aggregate within a specific range, and adjusting the physical properties of the reaction slurry under specific conditions, it is possible to stably form cells in the geopolymer foam and produce geopolymer foam with excellent strength.

Modes for Carrying Out the Invention

Hereinafter, one embodiment of the method for manufacturing geopolymer foam according to the present invention will be described. The method for manufacturing geopolymer foam of the present invention involves obtaining a reaction slurry containing aluminosilicate, alkali metal silicate, aggregate, and water. The method for manufacturing geopolymer foam of the present invention includes adding a foaming agent to the reaction slurry to form a foaming slurry, and producing geopolymer foam by heating the foaming slurry. The method for manufacturing geopolymer foam of the present invention includes mica as an aggregate, with a specific average particle size and a specific particle size range, and the viscosity of the reaction slurry is within a specific range.

In the following description, preferred numerical ranges of the present invention may be indicated as appropriate. In such cases, the preferred ranges, more preferred ranges, and particularly preferred ranges regarding the upper and lower limits of these numerical ranges can be determined from any combination of these upper and lower limits. Furthermore, the expression "A to B" indicating a numerical range means "A or more and B or less," and is intended to include the endpoints (A, B) of that numerical range.

Also, the term "A and/or B" includes the concepts of "A and B" and "either A or B."

(Alum inosilicate)

The aluminosilicate used in the method for manufacturing geopolymer foam according to the present invention is a compound in which some of the silicon atoms in a silicate are replaced with aluminum atoms.

The aluminosilicate ($xM_2O \cdot yAl_2O_3 \cdot zSiO_2 \cdot nH_2O$, where M is an alkali metal) releases aluminum ions into the aqueous solution and produces silicate monomers (silicic acid, Si $(OH)_4$) during its reaction with the alkali metal silicate in the reaction slurry. The silicate monomers produced in this manner undergo polycondensation with cations present in the reaction slurry, forming a geopolymer with a polymer network of $SiO_4 \cdot AlO_4$ tetrahedral structures.

Examples of aluminosilicates include clay minerals such as beidellite, bentonite, metakaolin, kaolinite, halloysite, montmorillonite, pyrophyllite, vermiculite, mica, chlorite, saponite, sepiolite, and acid clay; as well as fly ash, silica fume, and other aluminum-containing silicate minerals. Materials containing these substances as components may also be used. Additionally, calcined aluminosilicates are preferred as the aluminosilicate, with metakaolin being particularly preferred. These substances can be commercially available and may be used individually or in combination. Furthermore, it is preferable that the aluminosilicate be in powder form. By appropriately grinding and classifying these substances, they can be adjusted to the desired composition of aluminosilicate

The particularly preferred aluminosilicate is metakaolin, which is represented by the chemical formula: $Al_2O_3 \cdot 2SiO_2$. It is preferred that the proportion of metakaolin in the aluminosilicate be 50% by mass or more, more preferably 60% by mass or more, even more preferably 80% by mass or more, and particularly preferably 90% by mass or more. When the proportion of metakaolin in the aluminosilicate is within the above range, a good cell structure with many cells can easily be formed in the geopolymer foam, and a geopolymer foam with excellent strength can be stably produced.

When using powdered aluminosilicate, it is preferable that the average particle size of the aluminosilicate be 0.1 to 50 $\mu$m, more preferably 0.3 to 30 $\mu$m, and even more preferably 0.5 to 10 $\mu$m. The above-mentioned range for the average particle size of the aluminosilicate includes all intermediate ranges such as 0.1 to 30 $\mu$m, 0.1 to 10 $\mu$m, 0.3 to 50 $\mu$m, 0.3 to 10 $\mu$m, 0.5 to 50 $\mu$m, and 0.5 to 30 $\mu$m. When the average particle size of the aluminosilicate is within this range, a good cell structure is formed in the produced geopolymer foam.

The average particle size of the aluminosilicate can be measured by laser diffraction scattering. Specifically, the average particle size is calculated as an arithmetic mean based on the particle size distribution measured by laser diffraction scattering. The above-mentioned average particle size refers to the diameter of a hypothetical sphere having the same volume as the measured particle.

The content of $Al_2O_3$ in the aluminosilicate is preferably 20 to 70% by mass of the total mass of the aluminosilicate, more preferably 30 to 50% by mass. The above-mentioned range for the $Al_2O_3$ content includes all intermediate ranges such as 20 to 50% by mass and 30 to 70% by mass. When the $Al_2O_3$ content is within this range, it is easier to enhance the strength of the geopolymer foam.

(Alkali Metal Silicate)

Examples of alkali metal silicates used in the method for manufacturing geopolymer foam according to the present invention include potassium silicate, sodium silicate, and lithium silicate, and any compound containing these components can be used. When alkali metal silicate is dissolved in water, a highly alkaline aqueous solution is obtained, making the reaction slurry highly alkaline.

In the reaction slurry, the alkali metal silicate in the alkaline aqueous solution reacts with the aluminosilicate, causing cations such as Al to elute from the aluminosilicate into the reaction slurry. Additionally, the reaction slurry contains silicate monomers. Therefore, the alkali metal silicate serves as a source of silicate monomers that form geopolymer through polycondensation. However, the method of reacting alkali metal silicate with aluminosilicate is not limited to using an alkaline aqueous solution of alkali metal silicate as long as the reaction between the alkali metal silicate and the aluminosilicate occurs. In other words, alkali metal silicate does not necessarily have to be used in the form of an alkaline aqueous solution.

In the present invention, it is preferable to use potassium silicate among the alkali metal silicates. Additionally, in order to adjust the hydrogen ion concentration (pH) of the alkaline aqueous solution and achieve the desired alkalinity, alkali metal hydroxides such as potassium hydroxide or sodium hydroxide can be added to the alkali metal silicate solution.

The molar ratio of $SiO_2$ to $K_2O$ in potassium silicate ($SiO_2/K_2O$ ratio) is preferably 1 to 5, more preferably 1.5 to 4.5, and even more preferably 3 to 4. When the molar ratio ($SiO_2/K_2O$ ratio) is within this range, it can further improve the strength of the geopolymer foam.

Moreover, it is preferable to use the above alkali metal silicate in the form of an aqueous solution. For example, the concentration of alkali metal silicate in the alkali metal silicate aqueous solution is preferably 20 to 60% by mass, more preferably 22 to 50% by mass, and even more preferably 25 to 45% by mass. The above-mentioned range for the concentration of alkali metal silicate includes all intermediate ranges such as 20 to 50% by mass, 20 to 45% by mass, 22 to 60% by mass, 22 to 45% by mass, 25 to 60% by mass, and 25 to 50% by mass. When the concentration of alkali metal silicate is within this range, the foaming formability of the reaction slurry obtained by mixing aluminosilicate and alkali metal silicate aqueous solution can be improved.

(Adding potassium hydroxide)

In particular, to adjust the pH of the reaction slurry containing the alkaline aqueous solution and promote the reaction between the aluminosilicate and the alkali metal silicate, it is preferred to add potassium hydroxide in an amount of 10 to 90 parts by mass relative to 100 parts by mass of alkali metal silicate, more preferably 50 to 80 parts by mass. The above-mentioned range for the addition amount of potassium hydroxide includes all intermediate ranges such as 10 to 80 parts by mass and 50 to 90 parts by mass.

(Aggregate: Mica)

In the method for manufacturing geopolymer foam according to the present invention, mica is used as the aggregate to be added. Mica is a silicate mineral generally referred to as muscovite, with the chemical composition $KAl_2(AlSi_3O_{10})(OH)_2$. In the present invention, the term "mica" includes phyllosilicate minerals that are physically and chemically similar.

The mica used as an aggregate in the present invention has an average particle size of 50 to 500 $\mu$m, with a particle size distribution such that the volume fraction of particles with a particle size of 10 $\mu$m or less (X) is 3% or less. Adding mica with an average particle size greater than 500 $\mu$m tends to increase the viscosity of the reaction slurry. From this perspective, the preferred average particle size of mica is 80 to 300 $\mu$m, more preferably 100 to 200 $\mu$m. The above-mentioned range for the average particle size of mica includes all intermediate ranges such as 50 to 300 $\mu$m, 50 to 200 $\mu$m, 80 to 500 $\mu$m, 80 to 200 $\mu$m, 100 to 500 $\mu$m, and 100 to 300 $\mu$m. The average particle size of mica can be measured by laser diffraction scattering. Specifically, it can be calculated as an arithmetic mean based on the volume-based particle size distribution measured by laser diffraction scattering. The average particle size mentioned above refers to the diameter of a hypothetical sphere having the same volume as the particle.

Additionally, when the volume fraction of particles with a particle size of 10 μm or less (X) exceeds 3%, the viscosity of the reaction slurry also tends to increase. Smaller particle sizes make the particles more prone to aggregation, which can cause the viscosity of the reaction slurry to rise. From this perspective, the volume fraction of particles with a particle size of 10 μm or less (X) is preferably 3.0% or less, more preferably 2.5% or less. Although a lower volume fraction of particles with a particle size of 10 μm or less (X) is preferable, the lower limit is generally around 0.5%.

When the average particle size of mica and the volume fraction of particles with a particle size of 10 μm or less are within the specified ranges, the viscosity of the reaction slurry in which the geopolymer is formed does not increase excessively. As a result, a reaction slurry suitable for constructing the cell structure of the geopolymer is obtained. Furthermore, since a cell structure that can form a geopolymer foam with excellent strength is built, it is possible to stably produce a geopolymer foam with excellent strength.

The amount of mica added (Y) is not limited as long as the average particle size of the mica and the volume fraction of particles with a particle size of 10 μm or less (X) are within the specified ranges. For example, the amount of mica added (Y) is preferably 10 to 150 parts by mass relative to 100 parts by mass of aluminosilicate, more preferably 20 to 110 parts by mass, and even more preferably 30 to 100 parts by mass. The above-mentioned range for the amount of mica added (Y) includes all intermediate ranges such as 10 to 110 parts by mass, 10 to 100 parts by mass, 20 to 150 parts by mass, 20 to 100 parts by mass, 30 to 150 parts by mass, and 30 to 110 parts by mass.

Moreover, it is preferable that the amount of mica added (Y [parts by mass]) and the volume fraction of mica particles with a particle size of 10 μm or less in the mica (X [%]) satisfy the following equation (1).

$$0.1 \leqq X \times Y/100 \leqq 3 \quad \cdots (1)$$

When the relationship between the amount of mica added (Y) and the volume fraction of mica particles with a particle size of 10 μm or less (X) is within the specified range, the increase in the viscosity of the reaction slurry is more reliably suppressed. It is believed that the above equation (1) is related to the content of relatively small particle size mica present in the reaction slurry.

(Geopolymer Powder)

In the method for manufacturing geopolymer foam according to the present invention, it is preferable to further include geopolymer powder as an aggregate. The geopolymer powder is preferably obtained by grinding recovered materials such as offcuts or scraps of the geopolymer foam of the present invention and/or by grinding the geopolymer foam of the present invention. The geopolymer powder acts as an aggregate in the method for manufacturing geopolymer foam according to the present invention, thereby improving the strength of the geopolymer foam and enhancing its recyclability during the manufacturing process. It should be noted that the geopolymer powder is distinct from the geopolymer obtained by reacting aluminosilicate with alkali metal silicate in the reaction slurry and is added separately to the reaction slurry.

Additionally, when using recovered geopolymer foam materials as an aggregate, the mica contained in the geopolymer powder is distinguished from the mica added to the reaction slurry. The mica present in the geopolymer foam is no longer considered to exist independently as particles in the powder but is believed to be incorporated within the geopolymer structure. Therefore, the behavior of the mica in the geopolymer within the reaction slurry differs from that of the standalone mica added to the reaction slurry. However, when using recovered geopolymer foam materials, the mica contained in the geopolymer of these materials does not participate in the geopolymer formation reaction but may contribute to the enhancement of the strength of the newly formed geopolymer foam, similar to the mica added during the reaction.

The average particle size of the geopolymer powder is preferably 30 to 700 μm, more preferably 100 to 300 μm. The above-mentioned range for the average particle size of the geopolymer powder includes all intermediate ranges such as 30 to 300 μm and 100 to 700 μm. When the average particle size of the geopolymer powder is within this range, the viscosity of the reaction slurry is more likely to be within an appropriate range, making the reaction slurry suitable for the formation of geopolymer and the construction of the cell structure, thereby enabling the stable production of geopolymer foam with excellent strength.

The volume fraction of geopolymer powder particles with a particle size of 10 μm or less in the geopolymer powder is preferably 5% or less, more preferably 3% or less, and even more preferably 2% or less. The lower limit for the above volume fraction is generally around 0.5%. When the average particle size of the geopolymer powder and the volume fraction of particles with a particle size of 10 μm or less are within the specified ranges, it is possible to suppress the increase in the viscosity of the reaction slurry and produce a geopolymer foam with the desired cells.

In the present invention, the particle size of the aggregate can be measured by laser diffraction scattering.

Specifically, the particle size can be calculated as an arithmetic mean based on the volume-based particle size distribution measured by laser diffraction scattering. The average particle size mentioned above refers to the diameter of a hypothetical sphere having the same volume as the particle.

(Geopolymer Powder Content)

The amount of geopolymer powder added (Z) as an aggregate is preferably 1 to 80 parts by mass, more preferably 5 to 70 parts by mass, and even more preferably 10 to 50 parts by mass relative to 100 parts by mass of aluminosilicate. The above-mentioned range for the amount of geopolymer powder added (Z) includes all intermediate ranges such as 1 to 70 parts by mass, 1 to 50 parts by mass, 5 to 80 parts by mass, 5 to 50 parts by mass, 10 to 80 parts by mass, and 10 to 70 parts by mass. When the content of geopolymer powder is within this range, the geopolymer powder acts as an aggregate, thereby stabilizing the cell structure of the geopolymer foam and enhancing the strength of the geopolymer.

When using recovered geopolymer powder as an aggregate, for example, when using geopolymer powder that has been repeatedly recycled over a long period, the strength of the geopolymer foam may decrease in proportion to the number of recycling cycles. Therefore, it is desirable to additionally add mica.

(Other Aggregates)

In addition to the mica and geopolymer powder mentioned above, other aggregates may be used as the aggregate in the present invention, as long as they do not hinder the effects of the present invention. Examples of other aggregates include wollastonite, chalk, talc, mullite, cordierite, basalt, feldspar, zircon, graphite, and borax. Furthermore, it is preferable that these other aggregates have an average particle size of 50 $\mu$m to 500 $\mu$m. The amount of these other aggregates added is preferably 20% by mass or less of the total aggregate, more preferably 10% by mass or less.

(Manufacturing Method)

The method for manufacturing geopolymer foam according to the present invention involves obtaining a reaction slurry containing aluminosilicate, alkali metal silicate, aggregate, and water, adding a foaming agent to the reaction slurry to form a foaming slurry, and heating the foaming slurry to obtain geopolymer foam.

More specifically, the process is as follows. First, a reaction slurry containing aluminosilicate, alkali metal silicate, aggregate, and water is obtained, and the aluminosilicate and alkali metal silicate in the reaction slurry are reacted to form geopolymer. Next, a foaming agent is added to the reaction slurry to form a foaming slurry, and the foaming slurry is heated to generate cells, thereby obtaining geopolymer foam.

(Reaction Slurry)

In the method for manufacturing geopolymer foam according to the present invention, aluminosilicate and alkali metal silicate are reacted to form a reaction slurry containing geopolymer. When aluminosilicate and alkali metal silicate are reacted in an aqueous solution (slurry), aluminum ions elute into the aqueous solution, and silicate monomers (silicic acid, Si $(OH)_4$) are generated. It is believed that the silicate monomers thus produced undergo polycondensation with cations, resulting in the formation of geopolymer with a polymer network of $SiO_4$-$AlO_4$ tetrahedral structures.

Specifically, for example, a powder material mixture containing aluminosilicate and aggregate is mixed with alkali silicate and water. Preferably, the powder material mixture is mixed with an alkali silicate aqueous solution to react the aluminosilicate with the alkali metal silicate, forming a reaction slurry containing geopolymer.

The reaction slurry refers to a fluid in which solid components, including particles of the powder material mixture and particles such as geopolymer formed by the reaction of aluminosilicate and alkali metal silicate, are dispersed in water. In this reaction slurry, it is not necessary for the aluminosilicate and alkali metal silicate to have completely reacted to form geopolymer; it is sufficient if the formed geopolymer is present as part of the reaction slurry. The water content in the reaction slurry is preferably 25 to 45% by mass, more preferably 30 to 40% by mass. The above-mentioned range for the water content in the reaction slurry includes all intermediate ranges such as 25 to 40% by mass and 30 to 45% by mass. Although the medium of the reaction slurry is primarily water, water-soluble alcohols or other additives may be included as auxiliary components.

(Reaction Step)

The aluminosilicate and alkali metal silicate are uniformly dispersed in the reaction slurry, and the aluminosilicate and alkali metal silicate react to form geopolymer. The reaction between the aluminosilicate and alkali metal silicate is believed to occur when the aluminosilicate is added to the alkali metal silicate solution, but to make the reaction more efficient, it is preferable to heat the reaction slurry. When heating the reaction slurry, the decomposable foaming agent, described later, may also decompose due to the heat, causing foaming. The reaction and foaming may proceed simultaneously.

(Si/Al Ratio)

In the reaction step between the aluminosilicate and alkali metal silicate, it is preferable that the molar ratio of Si to Al (Si/Al) in the reaction slurry be 0.1 to 10, more preferably 0.5 to 5, and even more preferably 1 to 3. The above-mentioned range for the Si/Al molar ratio includes all intermediate ranges such as 0.1 to 5, 0.1 to 3, 0.5 to 10, 0.5 to 3, 1 to 10, and 1 to 5. When the Si/Al molar ratio in the reaction slurry is within this range, it is possible to appropriately maintain exchangeable cations in the resulting geopolymer foam and to form a good cell structure.

(Viscosity)

The viscosity at 23°C of the reaction slurry obtained by mixing aluminosilicate, alkali metal silicate, aggregate, and water (i.e., the reaction slurry formed by the reaction of aluminosilicate and alkali metal silicate) is in the range of 3000 to 15000 mPa·s. The viscosity is measured by the method described later. In the present invention, the viscosity of the reaction slurry can be adjusted by using the specific aggregate mentioned above. When the viscosity of the reaction slurry is within the above range, a sharp increase in viscosity due to the shear force applied to the reaction slurry with dispersed aggregate is avoided, making it easier to form the desired uniform cells. From this perspective, it is preferable that the viscosity of the reaction slurry at 23°C be 3500 to 10000 mPa·s, and more preferably 4000 to 9000 mPa·s. The above-mentioned range for the viscosity of the reaction slurry at 23°C includes all intermediate ranges such as 3000 to 10000 mPa·s, 3000 to 9000 mPa·s, 3500 to 15000 mPa·s, 3500 to 9000 mPa·s, 4000 to 15000 mPa·s, and 4000 to 10000 mPa·s.

(Other Additives, etc.)

The geopolymer foam may contain other materials as needed, such as nucleating agents, reactive materials, and reinforcing fibers. Examples of nucleating agents include talc, silica, and metallic soaps. The addition of nucleating agents can improve the foaming ability when adding a foaming agent. Examples of reactive materials include clays such as bentonite, sepiolite, minugel, and attapulgite clay, cement binders, calcium aluminate cement, and organic polymer binders (e.g., cellulose binders), which can be used alone or in combination. The addition of reactive materials can adjust the reaction (curing) time of the foaming slurry.

Furthermore, aluminosilicate, alkali metal silicate, and aggregate may contain other components. However, in such cases, the amount of aluminosilicate, alkali metal silicate, and aggregate added should be calculated based on the effective content, excluding the other components.

Reinforcing fibers can be added to improve the strength of the geopolymer foam and to prevent cracking. Examples of reinforcing fibers include vinylon fibers, polypropylene fibers, aramid fibers, acrylic fibers, rayon fibers, carbon fibers, glass fibers, potassium titanate whiskers, alumina fibers, steel wool, and slag wool. The addition of reinforcing fibers can enhance the strength of the foamed geopolymer. The amount of other materials added is not particularly limited as long as it is within the range that can achieve the intended purpose of the present invention. However, it is generally preferred that the amount be 20 parts by mass or less relative to 100 parts by mass of the geopolymer foam, more preferably 10 parts by mass or less.

(Foaming Agent)

Examples of foaming agents added to the reaction slurry include decomposable foaming agents such as hydrogen peroxide, sodium peroxide, potassium peroxide, and sodium perborate, as well as non-ferrous metal powders. An example of a non-ferrous metal powder is aluminum powder. Among these, it is preferable to use hydrogen peroxide or a non-ferrous metal powder as the foaming agent, with hydrogen peroxide being more preferred. The addition of a foaming agent to the reaction slurry forms a foaming slurry. In this foaming slurry, it is not necessary for the reaction between the aluminosilicate and alkali metal silicate to be fully complete; it is sufficient if at least part of the reaction has occurred.

When using hydrogen peroxide as the foaming agent, it is preferable to use it in the form of hydrogen peroxide solution. From the perspective of obtaining geopolymer foam with a good cell structure, it is preferable that the concentration of hydrogen peroxide in the solution be between 10% and 50% by mass, and more preferably between 20% and 40% by mass.

The amount of foaming agent added is not particularly limited, but for example, when adding hydrogen peroxide, it is preferable to add 0.1 to 20 parts by mass per 100 parts by mass of aluminosilicate, and more preferably 1 to 15 parts by mass. When the amount of foaming agent is within the above range, the foaming slurry can foam sufficiently, allowing for the stable production of geopolymer foam with a good cell structure.

(Cell Adjusting Agent)

In the foaming step, after forming a foaming slurry by adding a foaming agent to the reaction slurry, the foaming slurry is foamed, creating numerous cells in the foaming slurry of aluminosilicate and alkali silicate. By adding a cell adjusting agent to the foaming slurry, the cells can be interconnected. Examples of cell adjusting agents include microorganisms such as yeast and algae, proteins, and surfactants. Among these, yeast (such as dry yeast) is preferred as the cell adjusting agent. The preferred amount of yeast added is 0.1 to 2 parts by mass, more preferably 0.2 to 1 part by mass, relative to 100 parts by mass of the total aluminosilicate, alkali metal silicate, and geopolymer powder.

(Heating)

In the method for manufacturing geopolymer foam according to the present invention, the reaction between aluminosilicate and alkali metal silicate is further promoted by heating the foaming slurry containing the foaming agent. Additionally, by heating the foaming slurry, the foaming agent is caused to foam, forming cells, and thereby creating a geopolymer foam with numerous cells.

The temperature during the heating process can be determined based on the foaming agent used. In the case of a decomposable foaming agent, it is preferable to heat the slurry to a temperature near the decomposition temperature of the foaming agent. Specifically, when hydrogen peroxide solution is used as the foaming agent, the preferred heating temperature is between 50 and 80°C. The reaction and foaming induced by the heating may proceed simultaneously.

(Molding Step)

In the molding step, the foaming slurry is placed into a mold, and the mold is heated to further promote the reaction between the aluminosilicate and alkali metal silicate, while causing the foaming agent to foam. This process results in an in-mold molded article of geopolymer foam that takes the shape of the mold. Additionally, various molding methods can be selected to shape the geopolymer foam into the desired form.

For example, when the casting method is selected, the cells formed by the foaming of the foaming slurry grow over a period of about 30 minutes to 1 hour after the addition of the foaming agent, forming the cell structure.

(Foamed Molded Article)

The method for manufacturing geopolymer foam according to the present invention differs from physical foaming, where cells are formed by stirring or similar methods. In this method, the foaming agent gradually causes the cells to grow and foam. As a result, the formation of fine cells is less likely, and a geopolymer foam with a relatively uniform cell structure and minimal variation in cell size can be obtained. Additionally, the moderate increase in viscosity of the reaction slurry due to the addition of specific mica contributes to the stabilization of the cells, making it easier to form the cell structure of the geopolymer foam.

The apparent density of the geopolymer foam is preferably in the range of 100 to 500 $kg/m^3$. From the perspective of lightness, it is more preferable that the apparent density be in the range of 105 to 300 $kg/m^3$, and even more preferable in the range of 110 to 200 $kg/m^3$. The above-mentioned range for the apparent density of the geopolymer foam includes all intermediate ranges such as 100 to 300 $kg/m^3$, 100 to 200 $kg/m^3$, 105 to 500 $kg/m^3$, 105 to 200 $kg/m^3$, 110 to 500 $kg/m^3$, and 110 to 300 $kg/m^3$.

The maximum cell diameter of the geopolymer foam is preferably in the range of 1 to 10 mm. If a cell structure with such a cell diameter can be formed, it becomes easier to form cell walls with excellent strength. From this perspective, the preferred maximum cell diameter is in the range of 2 to 5 mm. The above-mentioned range for the maximum cell diameter of the geopolymer foam includes all intermediate ranges such as 2 to 10 mm and 1 to 5 mm.

The geopolymer foam of the present invention, which has the above characteristics, forms a large number of cells with stable diameters, and possesses excellent heat resistance, thermal insulation, and high strength, making it particularly suitable for use as a refractory brick. For example, when the geopolymer foam is used as the inner wall material of a melting furnace, it prevents the furnace wall temperature from decreasing. As a result, the furnace's thermal insulation is improved, allowing for a reduction in the input heat, which can significantly contribute to energy savings.

Examples

Hereinafter, the method for manufacturing the geopolymer foam of the present invention will be described in detail with reference to examples. However, the present invention is not limited in any way to the following examples.

(Starting Materials for Geopolymer Foam Formation)

The geopolymer foam was prepared using the following materials:

Aluminosilicate: Metakaolin (manufactured by Imerys: Argical M1200S, crystallinity 0%)
Alkali Metal Silicate: Potassium silicate (manufactured by Nippon Chemical Industrial: 2K potassium silicate)
Foaming Nucleating Agent: Talc (manufactured by Matsumura Sangyo: Hi-filler 5000PJS)
Foaming Agent: Hydrogen peroxide solution (manufactured by Fujifilm Wako Pure
Chemical: hydrogen peroxide concentration 30 mass%)
Aggregate 1-1: Mica (manufactured by Imerys: MU280)
Aggregate 1-2: Mica (manufactured by Imerys: M814)
Aggregate 1-3: Mica (manufactured by Seishin Enterprise: C100M)
Aggregate 1-4: Mica (manufactured by Seishin Enterprise: C60M)
Aggregate 1-5: Mica (manufactured by Seishin Enterprise: CS-35)
Aggregate 2-1: Pulverized product 1 (pulverized product of geopolymer foam)
Aggregate 2-2: Pulverized product 2 (pulverized product of geopolymer foam)

(Production of Geopolymer Powder Used as Aggregate)

As the geopolymer powder used as an aggregate, geopolymer foam was first produced and then pulverized to obtain the geopolymer powder. This geopolymer powder is intended to be used as a recycled material by collecting scraps and offcuts of the geopolymer foam. Mica was used as the aggregate in the production of the above-mentioned geopolymer, which is intended to be used as recycled material.

First, metakaolin and mica as the aggregate were mixed to form a powder raw material mixture. Additionally, potassium silicate, potassium hydroxide, and distilled water were mixed to prepare an alkali metal silicate solution (concentration 37%, pH = 14 or higher). The mixing amount of the aggregate (mica) was adjusted to 96 parts by mass relative to 100 parts by mass of the aluminosilicate.

Next, the alkali metal silicate solution was mixed with 100 parts by mass of the powder raw material mixture at a ratio of 104 parts of the solution, and the mixture was stirred at a stirring speed of 60 rpm to form the reaction slurry.

Next, 1.5 parts of a foaming agent (30% hydrogen peroxide solution) were added to 100 parts by mass of the reaction slurry, and the mixture was stirred at a stirring speed of 60 rpm for 1 minute using a stirring blade to form a foaming slurry. The foaming slurry was then poured into a mold (molding mold), and the mold was sealed. By heating the mold to 60°C and maintaining it for 1 hour, a geopolymer in-mold foam was obtained.

After that, the geopolymer foam was pulverized using an automatic mortar NITTO KAGAKU CO.,Ltd ALG-200WD), and the particles were classified using sieves with different mesh sizes. As a result, geopolymer powders with the particle size distributions shown in Tables 1 and 2, referred to as Pulverized Product 1 and Pulverized Product 2, were obtained.

(Method for Manufacturing Geopolymer Foam)

Aluminosilicate (metakaolin), talc as the foaming nucleating agent, mica as the aggregate, and the above-mentioned geopolymer powder were mixed in the proportions shown in Tables 1 and 2 to form a powder raw material mixture. Additionally, potassium silicate and distilled water were mixed to prepare an alkali metal silicate solution (potassium silicate concentration 37%, pH = 14 or higher).

Next, the powder raw material mixture and the alkali metal silicate solution were mixed in the proportions shown in Tables 1 and 2, and the mixture was stirred at a speed of 60 rpm to react the aluminosilicate and alkali metal silicate to form a reaction slurry. Then, a foaming agent (30% hydrogen peroxide solution) was added to the reaction slurry in the proportions shown in Tables 1 and 2, and the mixture was stirred using a stirring blade at a speed of 60 rpm for 1 minute to obtain a foaming slurry.

A mold (molding mold) with a cylindrical molding space of 90 mm in diameter and 60 mm in height was used. The foaming slurry was poured into this mold, which was then sealed, and the mold was maintained at a temperature of 60°C for 1 hour. This allowed the aluminosilicate and alkali metal silicate to fully react and the foaming slurry to foam, resulting in the formation of a geopolymer foam. The extracted geopolymer foam was further dried by maintaining it at 60°C for about one day.

(Measurement and Evaluation)

The average particle diameter of the aggregate and the viscosity of the reaction slurry were measured by the following methods. Additionally, the molded article density, maximum cell diameter, and average maximum point stress of the geopolymer foam for Examples 1 to 10 and Comparative Examples 1 to 6 produced by the above method were measured by the following methods. The viscosity control of the reaction slurry and the state of the foam were evaluated by the following methods. The results are shown in Tables 1 and 2.

(Average Particle Diameter of the Aggregate)

The average particle diameter of the aggregate (mica and geopolymer powder) was measured according to JIS Z 8825:2013 using the HORIBA Laser Scattering Particle Size Distribution Analyzer Partica LA-960. Specifically, the volume-based particle size distribution of the sample was measured using the laser diffraction/scattering method, and the volume mean diameter was calculated as the average particle diameter.

(Viscosity of the Reaction Slurry)

The viscosity of the reaction slurry was measured using an ATAGO VISCO manufactured by ATAGO CO., LTD. Specifically, 60 mL of the reaction slurry was placed in a 90 mL polystyrene cup, and the viscosity was measured while stirring at 60 rpm using a spindle with a measuring range of A3. The viscosity measurement was conducted on the reaction slurry before heating (at room temperature of 23°C), 5 minutes after mixing and stirring the aluminosilicate, geopolymer powder (powder raw material mixture), and alkali metal silicate solution. The above operation was repeated at least five times, and the average value was taken as the viscosity of the reaction slurry.

(Molded Article Density)

The molded article density of the geopolymer foam was calculated using the following method. A sample was prepared by removing the skin portion of the foam (the surface portion formed adjacent to the mold). The molded article density was calculated by measuring the apparent volume and mass of this sample, then dividing the mass by the apparent volume and converting the units as necessary.

(Maximum Cell Diameter)

The maximum cell diameter of the geopolymer foam was determined by projecting any part of the circular cross-section of a cylindrical measurement sample (without the skin portion) at 20x magnification and measuring the maximum diameter of each individual cell. The average of the five largest diameters was taken as the maximum cell diameter.

(Average Maximum Point Stress)

The compressive strength (maximum point stress) of the geopolymer foam was measured using a Shimadzu "Autograph AG-500B" testing machine. First, a cylindrical measurement sample with a diameter of 90 mm and a height of 50 mm, without the skin portion on the upper and lower surfaces (bottom surface) in the axial direction, was placed in the testing machine. A compressive load was applied to the sample in the direction corresponding to the height of the sample. The compression speed was set to 1 mm/min.
The compression test was conducted until the displacement of the measurement sample reached 5 mm, and the maximum stress observed during this test (maximum point stress) was recorded as the compressive strength. Five measurement samples were prepared, and their average value was taken as the average maximum point stress.

(Viscosity Control of the Reaction Slurry)

The viscosity control of the reaction slurry was evaluated based on the following criteria:

A: Stirring is possible at a stirring speed of 60 rpm.
B: Stirring is not possible at a stirring speed of 60 rpm, and the slurry forms lumps.

<Examples 1 to 10>

In Examples 1 to 4, only mica was used as the aggregate to obtain the geopolymer foam. In Examples 5 to 10, both mica and geopolymer powder were used in the proportions shown in Tables 1 and 2 to obtain the geopolymer foam. During the manufacturing process of the geopolymer foam, no excessive increase in the viscosity of the reaction slurry was observed, and geopolymer foam with very good cells was obtained. Additionally, the resulting geopolymer foam was confirmed to have excellent strength.

<Comparative Examples 1, 4-6>

Mica with a higher proportion of particles below 10 $\mu$m (3.6%) than specified in the present invention was used as the aggregate. As a result, the viscosity of the reaction slurry increased to the point where it was unmeasurable, and it was not possible to obtain a geopolymer foam.

<Comparative Examples 2, 3>

Only geopolymer powder (pulverized product) was used as the aggregate. The viscosity control of the prepared reaction slurry was significantly inferior compared to Examples 1 to 10.

<Comparison of Examples and Comparative Examples>

As shown in Examples 1 to 10, when the average particle diameter of the mica used as the aggregate and the volume proportion of particles with a diameter of 10 $\mu$m or less are within the specified ranges of this invention, the viscosity of the reaction slurry remains within the specified range, and it was confirmed that a geopolymer foam with excellent strength can be obtained.

On the other hand, as shown in Comparative Examples 1 and 4 to 6, when the volume proportion of particles with a diameter of 10 $\mu$m or less in the mica used as the aggregate exceeds 5%, the viscosity control of the reaction slurry significantly deteriorates, making it difficult to obtain a geopolymer foam with the desired cell diameter and strength. Additionally, as shown in Comparative Examples 2 and 3, when only geopolymer powder (pulverized product) is used as the aggregate, the viscosity control of the reaction slurry significantly deteriorates, making it difficult to obtain a geopolymer foam with the desired cell diameter and strength.

(Evaluation of the Recyclability of the Obtained Geopolymer Molded Articles)

In Examples 5 to 10 and Comparative Examples 2 to 6, when geopolymer powder was used as the aggregate, the amount of mica in the geopolymer foam (including the mica in the geopolymer powder) decreased with each recycling, and eventually, the proportion of mica in the geopolymer foam reached a constant value. This constant value is related to the amount of geopolymer powder used. When the amount of geopolymer powder is 29 parts by mass, the proportion of mica in the geopolymer foam (convergence value) is 28%. When the amount of geopolymer powder is 48 parts by mass, the proportion of mica in the geopolymer foam (convergence value) is 22%. When the amount of geopolymer powder is 67 parts by mass, the proportion of mica in the geopolymer foam (convergence value) is 15%. Additionally, when only geopolymer powder is used as the aggregate in an amount of 96 parts by mass, the proportion of mica in the geopolymer foam (convergence value) becomes nearly 0%.

[Table 1]

| | | Example 1 | Example2 | Example3 | Example4 | Example5 | Example6 | Example7 | Example8 | Example9 | Example10 |
|---|---|---|---|---|---|---|---|---|---|---|---|
| Raw Materials | Raw Materials | Metakaolin (parts by mass) | 100 | 100 | 100 | 100 | 100 | 100 | 100 | 100 | 100 | 100 |
| | | Foaming Nucleating Agent (parts by mass) | 5.2 | 5.2 | 5.2 | 5.2 | 5.2 | 5.2 | 5.2 | 5.2 | 5.2 | 5.2 |
| | | Alkali Metal Silicate Solution (parts by mass) | 204 | 204 | 204 | 204 | 204 | 204 | 204 | 204 | 204 | 204 |
| | | Hydrogen Peroxide Solution (parts by mass) | 6 | 6 | 6 | 6 | 6 | 6 | 6 | 6 | 6 | 6 |
| | | Total Water Content (parts by mass) | 129 | 129 | 129 | 129 | 129 | 129 | 129 | 129 | 129 | 129 |
| | Mica | Type of Aggregate | MU280 | M814 | C100M | C60M | MU280 | MU280 | M814 | C100M | C60M | MU280 |
| | | Amount Used (parts by mass) | 96 | 96 | 96 | 96 | 67.2 | 48 | 67.2 | 67.2 | 67.2 | 28.8 |
| | | Average Particle Diameter ($\mu$m) | 134 | 86 | 112 | 232 | 134 | 134 | 86 | 112 | 232 | 134 |
| | | Volume Ratio of Particles with Diameter $\leq 50\ \mu$m in Mica (%) | 23.5 | 27.1 | 23.7 | 7.4 | 23.5 | 23.5 | 27.1 | 23.7 | 7.4 | 23.5 |

| | | | Example 1 | Example2 | Example3 | Example4 | Example5 | Example6 | Example7 | Example8 | Example9 | Example10 |
|---|---|---|---|---|---|---|---|---|---|---|---|---|
| Aggregate | | Volume Ratio of Particles with Diameter $\leq 30\,\mu$m in Mica (%) | 13.4 | 11 | 12.3 | 3.6 | 13.4 | 13.4 | 11 | 12.3 | 3.6 | 13.4 |
| | | Volume Ratio of Particles with Diameter $\leq 10\,\mu$m in Mica (%) | 2.3 | 0.7 | 1.39 | 0.14 | 2.3 | 2.3 | 0.7 | 1.39 | 0.14 | 2.3 |
| | | Mica Addition (Y) × Volume Ratio of Particles with Diameter $\leq 10\,\mu$m in Mica (X) | 2.2 | 0.67 | 1.3 | 0.13 | 1.5 | 1.1 | 0.47 | 0.93 | 0.1 | 0.66 |
| | Geopolymer Powder | Type of Geopolymer | - | - | - | - | Pulverized Product 1 | Pulverized Product 1 | I Pulverized Product 1 | Pulverized Product 1 | Pulverized Product 1 | Pulverized Product2 |
| | | Amount Used (parts by mass) | - | - | - | - | 28.8 | 48 | 28.8 | 28.8 | 28.8 | 67.2 |
| | | Average Particle Diameter ($\mu$m) | - | - | - | - | 262 | 262 | 262 | 262 | 262 | 654 |
| | | Volume Ratio of Particles with Diameter $\leq 10\,\mu$m in Geopolymer Powder (%) | - | - | - | - | 1.7 | 1.7 | 1.7 | 1.7 | 1.7 | 0 |

13

| | | | Example 1 | Example2 | Example3 | Example4 | Example5 | Example6 | Example7 | Example8 | Example9 | Example10 |
|---|---|---|---|---|---|---|---|---|---|---|---|---|
| | | Aggregate Amount / Geopolymer Foam (%) | 35.4 | 35.4 | 35.4 | 35.4 | 35.4 | 35.4 | 35.4 | 35.4 | 35.4 | 35.4 |
| | | Mica / Geopolymer Powder | - | - | - | - | 2.3 | 1 | 2.3 | 2.3 | 2.3 | 0.4 |
| Reaction | Slurry | Slurry Viscosity at 60 rpm (mPa·s) | 6744 | 4759 | 7484 | 9880 | 7862 | 9626 | 6263 | 10168 | 10763 | 10191 |
| | | Water Ratio in Reaction Slurry (Water/Slurry Components) | 31 | 31 | 31 | 31 | 31 | 31 | 31 | 31 | 31 | 31 |
| | | Viscosity Control of Reaction Slurry | A | A | A | A | A | A | A | A | A | A |
| | | Presence of Water Addition | None | None | None | None | None | None | None | None | None | None |
| Molded Article Properties | Physical Properties | Density (kg/m$^3$) | 288 | 266 | 281 | 321 | 285 | 293 | 267 | 272 | 307 | 290 |
| | | Maximum Cell Diameter (mm) | 2.9 | 1.4 | 2.7 | 3.4 | 2.6 | 2.5 | 1.3 | 2.2 | 3 | 3.3 |
| | | Average Maximum Point Stress (N/mm$^2$) | 1.34 | 0.71 | 1.01 | 0.7 | 1.38 | 1.25 | 0.73 | 0.79 | 0.93 | 0.85 |

[Table 2]

| | | Comparative Example 1 | Comparative Example 2 | Comparative Example 3 | Comparative Example 4 | Comparative Example 5 | Comparative Example 6 |
|---|---|---|---|---|---|---|---|
| Raw Materials | Metakaolin (parts by mass) | 100 | 100 | 100 | 100 | 100 | 100 |
| | Foaming Nucleating Agent (parts by mass) | 5.2 | 5.2 | 5.2 | 5.2 | 5.2 | 5.2 |
| | Alkali Metal Silicate Solution (parts by mass) | 204 | 204 | 204 | 204 | 204 | 204 |
| | Hydrogen Peroxide Solution (parts by mass) | 6 | 6 | 6 | 6 | 6 | 6 |
| | Total Water Content (parts by mass) | 129 | 129 | 135 | 129 | 129 | 129 |
| Mica | Type of Aggregate | CS-35 | - | - | CS-35 | CS-35 | CS-35 |
| | Amount Used (parts by mass) | 67.2 | - | - | 67.2 | 48 | 28.8 |
| | Average Particle Diameter ($\mu$m) | 68 | - | - | 68 | 68 | 68 |
| | Volume Ratio of Particles with Diameter $\leq 50\ \mu$m in Mica (%) | 57.5 | - | - | 57.5 | 57.5 | 57.5 |
| | Volume Ratio of Particles with Diameter $\leq 30\ \mu$m in Mica (%) | 36.7 | - | - | 36.7 | 26.9 | 36.9 |
| | Volume Ratio of Particles with Diameter $\leq 10\ \mu$m in Mica (%) | 3.6 | - | - | 3.6 | 3.6 | 3.6 |
| | Mica Addition (Y) × Volume Ratio of Particles with Diameter $\leq 10\ \mu$m in Mica (X) | 2.4 | - | - | 2.4 | 1.7 | 1 |
| Aggregate | Geopolymer Powder — Type of Geopolymer | - | Pulverized Product 1 | Pulverized Product 2 | Pulverized Product 1 | Pulverized Product 1 | Pulverized Product 1 |
| | Geopolymer Powder — Amount Used (parts by mass) | - | 96 | 96 | 28.8 | 48 | 67.2 |
| | Geopolymer Powder — Average Particle Diameter ($\mu$m) | - | 262 | 654 | 262 | 262 | 262 |
| | Geopolymer Powder — Volume Ratio of Particles with Diameter $\leq 10\ \mu$m in Geopolymer Powder (%) | - | 1.7 | 0 | 1.7 | 1.7 | 1.7 |
| | Aggregate Amount / Geopolymer Foam (%) | 30 | 35.4 | 35.4 | 35.4 | 35.4 | 35.4 |
| | Mica / Geopolymer Powder | - | 0 | 0 | 2.3 | 2.3 | 0.4 |

(continued)

| | | | Comparative Example 1 | Comparative Example 2 | Comparative Example 3 | Comparative Example 4 | Comparative Example 5 | Comparative Example 6 |
|---|---|---|---|---|---|---|---|---|
| Reaction | Slurry | Slurry Viscosity at 60 rpm (mPa·s) | >17700 | >17700 | 8913 | >17700 | >17700 | >17700 |
| | | Water Ratio in Reaction Slurry (Water/Slurry Components) | 33.4 | 31.0 | 34.7 | 31.0 | 31.0 | 31.0 |
| | | Viscosity Control of Reaction Slurry | B | B | B | B | B | B |
| | | Presence of Water Addition | None | None | Present | None | None | None |
| Molded Article Properties | Physical Properties | Density (kg/m$^3$) | - | 305 | 280 | - | - | - |
| | | Maximum Cell Diameter (mm) | - | 3.5 | 3.9 | - | - | - |
| | | Average Maximum Point Stress (N/mm$^2$) | - | 0.55 | 0.21 | - | - | - |

**Claims**

1. A method for producing a geopolymer foam, comprising obtaining a reaction slurry containing aluminosilicate, alkali metal silicate, aggregate, and water, adding a foaming agent to the reaction slurry to form a foaming slurry, and heating the foaming slurry,

   wherein the aggregate used is mica with an average particle size of 50 to 500 $\mu$m and a volume fraction (X) of particles with a particle size of 10 $\mu$m or less of 3% or less, and
   wherein the viscosity of the reaction slurry at 23°C is 3000 to 15000 mPa·s.

2. The method for producing a geopolymer foam according to Claim 1, wherein the average particle size of the mica is 80 to 300 $\mu$m.

3. The method for producing a geopolymer foam according to Claim 1 or 2, wherein the amount of mica (Y) added is 10 to 150 parts by weight relative to 100 parts by weight of aluminosilicate, and the relationship between the amount of mica added (Y [parts by weight]) and the volume fraction (X [%]) of mica particles with a particle size of 10 $\mu$m or less in the mica satisfies the following formula (1):

$$0.1 \leqq X \times Y/100 \leqq 3 \quad \cdots (1)$$

4. The method for producing a geopolymer foam according to any one of Claims 1 to 3, wherein the proportion of water in the reaction slurry is 25 to 45 parts by weight.

5. The method for producing a geopolymer foam according to any one of Claims 1 to 4, wherein the aggregate further includes geopolymer powder, and the amount of the geopolymer powder added (Z) is 1 to 80 parts by weight relative to 100 parts by weight of aluminosilicate.

6. The method for producing a geopolymer foam according to Claim 5, wherein the geopolymer powder is powder obtained by grinding geopolymer foam scraps and/or powder obtained by grinding the geopolymer foam.

7. The method for producing a geopolymer foam according to Claim 5 or 6, wherein the volume fraction of geopolymer powder particles with a particle size of 10 $\mu$m or less in the geopolymer powder is 5% or less.

<table>
<tr><td colspan="2">**INTERNATIONAL SEARCH REPORT**</td><td>International application No.<br><br>**PCT/JP2023/013267**</td></tr>
</table>

**A. CLASSIFICATION OF SUBJECT MATTER**

*C04B 28/26*(2006.01)i; *C04B 12/04*(2006.01)i; *C04B 14/20*(2006.01)i; *C04B 20/00*(2006.01)i; *C04B 38/02*(2006.01)i
FI: C04B28/26 ZAB; C04B12/04; C04B14/20 A; C04B20/00 B; C04B38/02 G

According to International Patent Classification (IPC) or to both national classification and IPC

**B. FIELDS SEARCHED**

Minimum documentation searched (classification system followed by classification symbols)

C04B7/00-28/36; C04B38/00-38/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JSTChina/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2021-8396 A (MATSUMOTO YUSHI SEIYAKU KK) 28 January 2021 (2021-01-28)<br>entire text | 1-7 |
| A | JP 11-217280 A (SEKISUI CHEMICAL CO LTD) 10 August 1999 (1999-08-10)<br>entire text | 1-7 |
| A | JP 2011-219281 A (FURUKAWA ELECTRIC CO LTD) 04 November 2011 (2011-11-04)<br>entire text | 1-7 |
| A | JP 2021-533063 A (UNITED STATES GYPSUM COMPANY) 02 December 2021<br>(2021-12-02)<br>entire text | 1-7 |
| P, A | JP 2022-178855 A (JSP CORP) 02 December 2022 (2022-12-02)<br>entire text | 1-7 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **01 June 2023** | **20 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/013267**

| Patent document cited in search report | | | Publication date (day/month/year) | Patent family member(s) | | | Publication date (day/month/year) |
|---|---|---|---|---|---|---|---|
| JP | 2021-8396 | A | 28 January 2021 | (Family: none) | | | |
| JP | 11-217280 | A | 10 August 1999 | (Family: none) | | | |
| JP | 2011-219281 | A | 04 November 2011 | (Family: none) | | | |
| JP | 2021-533063 | A | 02 December 2021 | US <br> entire text <br> WO <br> EP <br> CA | 2020/0039884 <br><br> 2020/028292 <br> 3830052 <br> 3107443 | A1 <br><br> A1 <br> A1 <br> A | |
| JP | 2022-178855 | A | 02 December 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011219281 A